# EUROPÄISCHE PATENTSCHRIFT

(11) **EP 3 786 511 B1**
(45) Veröffentlichungstag und Bekanntmachung des Hinweises auf die Patenterteilung: **22.03.2023**
(21) Anmeldenummer: 19194565.8
(22) Anmeldetag: 30.08.2019
(51) Int. Cl.: F17C 1/06, F17C 1/16

(54) **DRUCKBEHÄLTER**
PRESSURE VESSEL
RÉCIPIENT SOUS PRESSION

(43) Veröffentlichungstag der Anmeldung: 03.03.2021
(73) Patentinhaber: NPROXX B.V., 6422 RK Heerlen (NL)
(72) Erfinder: Sonnen, Michael, 47259 Duisburg (DE); Otremba, Frank, 52223 Stolberg (DE)
(74) Vertreter: FARAGO Patentanwaltsgesellschaft mbH

(56) Entgegenhaltungen:
- DE-A1-102011 105 627
- DE-C- 474 125
- FR-A- 1 554 072
- US-A- 5 758 796

## Beschreibung

### Gebiet der Erfindung

Die Erfindung betrifft einen Hybriddruckbehälter mit einem Faserverbundbauteil und einem metallischen Bauteil. Weiterhin betrifft die Erfindung ein Herstellverfahren für einen solchen Hybriddruckbehälter.

### Hintergrund der Erfindung

Der Markt für Druckbehälter, insbesondere für Druckbehälter, die mit Faserverbundmaterial, hier und im Folgenden mit FVM abgekürzt, verstärkt werden, wächst kontinuierlich. Die zunehmende Förderung von Erdgas und Fracking-Gas macht speziell in Ländern ohne entsprechendes Pipelinenetz eine Speicherung in Druckbehältern erforderlich. Hinzu kommt der Fahrzeugsektor, der stark an der Entwicklung von Brennstoffzellen-Fahrzeugen arbeitet, bei denen der Brennstoff in Form von gasförmigem Wasserstoff unter hohem Druck in Druckbehältern gespeichert werden soll. Hierbei sei nicht nur an Automobile, sondern auch an Schienen-, Luft- und Wasserfahrzeuge gedacht. Selbst bei Raumfahrzeugen ist eine Anwendung vorstellbar. Für den Transport der Druckbehälter sind leichte Druckbehälter gewünscht, weil ein Transport von Druckbehältern mit hohen Behältergewichten unnötig viel Energie verbraucht und daher zu hohe Transportkosten verursacht.

Gegenwärtig benutzte zylinderförmige faserverstärkte Druckbehälter besitzen eine Verstärkungsschicht aus FVM aus Fasern eingebettet in einem Matrixmaterial, die als Außenschicht mittels eines Wickelverfahrens auf einen Innenbehälter (den sogenannte Liner) des Druckbehälters, der als Wickelkern fungiert, aufgewickelt wird. Ein Wickelverfahren ist für die zeit- und kostengünstige Herstellung von Faserverbundschichten der bevorzugte Prozess. Während der Innenbehälter beispielsweise die Gasdichtigkeit des Druckbehälters garantiert, verleiht die Verstärkungsschicht aus FVM dem Druckbehälter die notwendige mechanische Stabilität. Bei den Druckbehältern des Typs 3 wird ein metallischer Innenbehälter (metallischer Liner) z.B. aus Aluminium oder Stahl eingesetzt, bei Druckbehältern des Typs 4 ist der nicht tragende Innenbehälter (Liner) aus Kunststoff. Die Kunststoffliner werden üblicherweise durch Blasformen, Rotomoulding oder Schweißen einzelner Komponenten hergestellt. Die üblicherweise eingesetzten Materialien sind wegen der Herstellverfahren Thermoplaste wie beispielsweise Polyamide, oder Polyethylene, insbesondere Polyethylen höher Dichte.

Ein metallischer Boss dient der Möglichkeit des Anschlusses eines Ventils oder als Endteil eines Typ4 Behälters und kann dann als geschlossener Boss ausgeführt werden. Der Boss ist in seinem Außendurchmesser deutlich kleiner als der Außendurchmesser des Liners.

Die Druckbehälter müssen einem sehr hohen Innendruck standhalten. Gegenwärtig werden beispielsweise Wasserstofftanks von Automobilen mit einem Druck von ca. 700 bar betankt. Insbesondere dürfen die Druckbehälter auch im Crashfall nicht bersten. Daher werden solche Druckbehälter mit einem zylindrischen Mittelteil, das beidseitig mit sogenannten Polkappen verschlossen ist, konstruiert. Zylindrisches Mittelteil und Polkappen werden mit einem FVM als Verstärkungsschicht überwickelt. Beispielsweise wird die Verstärkungsschicht im Filament Winding Verfahren hergestellt, mit dem die Druckbehälter in einem Arbeitsgang gewickelt werden. Mit anderen Worten werden in einem Arbeitsgang die Fasern in Umfangs- und Kreuzlagen oder Helixlagen auf den Kunststoffliner aufgewickelt.

Besonderes Augenmerk liegt auf der Verbindung von Boss und Druckbehälter. Der Boss muss druckfest mit dem Druckbehälter verbunden sein, denn auch er und seine Verbindung mit dem Druckbehälter muss den hohen Innendrücken standhalten. Weiterhin muss der Boss dicht mit dem Druckbehälter verbunden sein. Gerade Wasserstoff ist ein Gas mit sehr kleinen Molekülen, wobei Wasserstoff ein hochexplosives Gas ist, weshalb es gerade für den Transport von Wasserstoff besonders wichtig ist, dass der Druckbehälter absolut dicht, auch gegenüber unter hohem Druck stehendem Wasserstoff, ist.

Aus der deutschen Offenlegungsschrift DE 10 2016 221 978 A1 ist ein Hybridbauteil aus einem hohlförmigen Faserverbundbauteil aus FVM und aus zumindest einer metallischen Krafteinleitungskomponente zur Übertragung von Kräften über die Krafteinleitungskomponente auf das Faserverbundbauteil bekannt, wobei das Faserverbundbauteil entlang einer vorgesehenen Hauptachse ein erstes und ein zweites Ende umfasst, wobei zumindest das erste Ende ein offenes Ende ist. Zumindest ein erster Bereich des offenen Endes mit einer Innenseite zugewandt zur Hauptachse und einer gegenüberliegenden Außenseite erstreckt sich entlang der Hauptachse, wobei sich der erste Bereich in Richtung des ersten Endes verjüngt. Die Krafteinleitungskomponente umfasst einen entsprechend geformten Innenkern zur Anlage an der Innenseite des ersten Bereichs und eine metallische Außenfassung mit einer inneren auf Innenkern und ersten Bereich angepassten Krafteinleitungsseite zur zumindest teilweisen Auflage auf der Außenseite des ersten Bereichs, wobei Innenkern und Außenfassung geeignet ausgestaltet sind, damit der Innenkern nach Aufsetzen der Außenfassung auf den ersten Bereich durch eine Zugverbindung durch das erste offene Ende hindurch so in Richtung der Außenfassung gezogen werden kann, dass dadurch ein geeigneter Presssitz der Außenfassung auf dem FVM des ersten Bereichs hergestellt werden kann, um die Kräfte über die Krafteinleitungskomponente auf das Faserverbundbauteil übertragen zu können. Allerdings ist das Hybridbauteil nicht als Druckbehälter geeignet, da es nicht über einen Liner und einen Boss, über den das Hybridbauteil gefüllt und entleert werden kann, verfügt.

Aus der französischen Offenlegungsschrift FR 1 554 072 A ist ein Hybriddruckbehälter mit einem eine Innenseite und eine Außenseite aufweisenden Liner und einem metallischen Boss bekannt, wobei der metallische Boss dazu eingerichtet ist, ein Ventil aufzunehmen, wobei der Hybriddruckbehälter in seinem Inneren ein Speichervolumen aufweist, wobei der Liner rohrförmig ausgeführt ist, wobei der Außendurchmesser des Boss mindestens genauso groß ist wie der Außendurchmesser des Liners.Aus der US-amerikanischen Offenlegungsschrift US 5 758 796 A ist ein Druckbehälter bekannt, der eine Auskleidung mit einer Endwandanordnung enthält, die durch Verbinden zweier starrer Endwandelemente in einem festen Abstand voneinander durch ein Verbindungselement gebildet wird. Weiter weist der Druckbehälter eine elastische Umfangswandplatte auf, die an den beiden Endwandelementen befestigt ist. Die beiden Endwandelemente sind durch ein Extrusionsverfahren aus einer Aluminiumlegierung hergestellt. Das Verbindungselement ist ein Rohr, das durch ein Extrusionsverfahren aus einer Aluminiumlegierung hergestellt ist und eine große Anzahl von Verbindungslöchern in der Rohrwand aufweist. Die Umfangswandplatte besteht aus Aluminiumfolie und ist zylindrisch geformt, um den Raum zwischen den beiden Endwandelementen einzuschließen. Um die Auskleidung herum sind eine spiralförmige Verstärkungsschicht und eine umreifte Verstärkungsschicht vorgesehen, die beide aus FRP bestehen.

Aus der deutschen Offenlegungschrift DE 10 2011 105627 A1 ist ein Zusammenbauverfahren für einen Verbund-Druckbehälter bekannt, wobei ein Endabschnitt eines rohrförmigen Elements in einen kreisringförmigen Schlitz gepasst wird, der in einer Endkappe gebildet ist. In dem kreisringförmigen Schlitz kann sich ein Dichtungsmittel befinden. Die Endkappe umfasst eine Ringnut in einer Außenfläche des Endkappenkörperabschnittes. Es wird eine erste Materiallage auf einer Außenfläche des rohrförmigen Elements gebildet. Die erste Materiallage umfasst ein erstes Verbundmaterial mit Fasern, die in Umfangsrichtung zu dem rohrförmigen Element orientiert sind. Es wird eine zweite Materiallage auf der ersten Materiallage gebildet, wobei ein Abschnitt der zweiten Materiallage in die Ringnut hinein angeordnet wird, die ein zweites Verbundmaterial umfasst, welches Fasern, die axial zu dem rohrförmigen Element orientiert sind, umfasst. Es wird eine dritte Materiallage benachbart zu der zweiten Materiallage und in der Ringnut gebildet, welche ein drittes Verbundmaterial mit Fasern umfasst, die eine Orientierung in Umfangsrichtung zu dem rohrförmigen Element aufweisen.

Aus einbaugeometrischen Gründen ist es wünschenswert, über entsprechende Druckbehälter mit kleinem Außendurchmesser verfügen zu können. Bei Druckbehältern mit kleinem Außendurchmesser ist das Verhältnis zwischen dem Außendurchmesser des Bosses und des Liners deutlich geringer bis nahe zu gleich. Es muss einerseits ein Ventil aufgenommen werden, was einen Mindestaußendurchmesser am Boss erfordert, andererseits ist die Fertigung eines sehr lang gestreckten Liners, insbesondere in serientauglichen Verfahren wie Blasformen oder Rotomoulding, nicht unproblematisch.

### Zusammenfassung der Erfindung

Die Aufgabe der Erfindung ist es, einen Hybriddruckbehälter mit möglichste kleinem Außendurchmesser mit einem Lineraußendurchmesser in der Größenordnung des Außendurchmessers des Boss anzugeben, der die Anforderungen an Berstsicherheit und Dichtigkeit wie bekannte Hybriddruckbehälter mit größerem Außendurchmessern erfüllt. Weiterhin ist es Aufgabe der Erfindung, ein Herstellverfahren für einen solchen Hybriddruckbehälter anzugeben.

Die erste Aufgabe wird gelöst von einem Hybriddruckbehälter gemäß Anspruch 1.

Der Begriff "Druckbehälter" umfasst alle Arten und Formen von Druckbehältern, die einen Innenbehälter, auch Liner genannt, beispielsweise aus einem thermoplastischen Material umfassen und mit einem Faserverbundmaterial außen mechanisch so verstärkt wurden, dass der Druckbehälter die Anforderungen an seine Druckbeständigkeit erfüllt. Unter einem Hybriddruckbehälter wird in dieser Schrift ein Druckbehälter verstanden, der verschiedene Werkstoffe, insbesondere einen Kunststoffliner und einen metallischen Boss, aufweist. Bekannte Druckbehälter sind zylinderförmig mit nach außen gewölbten Abschlüssen auf beiden Seiten des zylinderförmigen Mittelteils. Diese Anschlüsse werden als Polkappen bezeichnet und dienen zum druckdichten Verschluss des Mittelteils. Zur Verstärkung des Druckbehälters wird die Außenseite des Innenbehälters mit einer Außenschicht aus Faserverbundmaterial überwickelt, was gleichzeitig die Außenseite des Druckbehälters bilden kann. Der Innenbehälter kann mit verschiedenen Techniken hergestellt sein, beispielsweise mittels eines Schweißverfahrens, mittels Spritzguss oder als Blasformteil. Hierbei können die Polkappen auch nachträglich auf den Mittelteil aufgesetzt werden, beispielsweise mittels Verschweißen. Die separaten Polkappen können beispielsweise mittels Spritzguss hergestellt werden. Druckbehälter mit einem thermoplastischen Innenbehälter besitzen einerseits ein sehr geringes Gewicht, was beispielsweise für Anwendungen in Transportmitteln wichtig ist, und andererseits können Füllungen wie beispielsweise Wasserstoff unter hohem Druck verlustarm gespeichert werden, da geeignete Kunststoffe aus thermoplastischem Material eine hinreichend geringe Wasserstoffpermeabilität besitzen und die benötigte Festigkeit durch die Außenschicht aus Faserverbundmaterial bereitgestellt wird.

Ein Hybridruckbehälter bezeichnet einen solchen Druckbehälter, der aus mehreren unterschiedlichen Werkstoffen aufgebaut ist.

Ein Faserverbundmaterial FVM für die Faserverbundschicht besteht im Allgemeinen aus zwei Hauptkomponenten, hier aus Fasern, eingebettet in einem Matrixmaterial, das den festen Verbund zwischen den Fasern herstellt. Das Faserverbundmaterial kann dabei aus einer Faser oder aus mehreren Fasern gewickelt werden, wobei die Faser(n) in Kontakt zueinander eng nebeneinander gewickelt werden. Hierbei sind die gewickelten Fasern bereits mit Matrixmaterial getränkt. Dadurch entsteht eine Faserschicht, auf die die Fasern in weiteren Faserschichten gewickelt werden, bis das Faserverbundmaterial die gewünschte Dicke besitzt und eine entsprechende Faserlage mit dieser Dicke darstellt. Die Außenschicht wird dabei in mehreren Lagen aus Faserverbundmaterial gewickelt, wobei unterschiedliche Lagen Fasern mit unterschiedlichen Faserwinkeln zur Zylinderachse des Druckbehälters aufweisen können. In einer Ausführungsform umfassen die Faserlagen aus ersten und/oder weiteren Fasern, beispielsweise zweiten Fasern, jeweils mehrere Lagen an Fasern. Durch den Verbund erhält das Faserverbundmaterial höherwertige Eigenschaften, wie beispielsweise eine höhere Festigkeit als jede der beiden einzelnen beteiligten Komponenten liefern könnte. Die Verstärkungswirkung der Fasern in Faserrichtung tritt ein, wenn das Elastizitätsmodul der Faser in Längsrichtung größer ist als das Elastizitätsmodul des Matrixmaterials, wenn die Bruchdehnung des Matrixmaterials größer ist als die Bruchdehnung der Fasern oder wenn die Bruchfestigkeit der Fasern größer ist als die Bruchfestigkeit des Matrixmaterials. Als Fasern können Fasern aller Art, beispielsweise Glasfasern, Kohlenstofffasern, Keramikfasern, Stahlfasern, Naturfasern oder synthetische Fasern, verwendet werden. Als Matrixmaterialien für die Faserverbundschicht werden hierbei in der Regel Duromere, auch Duroplaste genannt, verwendet. Die Materialeigenschaften der Fasern und Matrixmaterialien sind dem Fachmann bekannt, so dass der Fachmann eine geeignete Kombination aus Fasern und Matrixmaterialien zur Herstellung des Faserverbundmaterials für die jeweilige Anwendung auswählen kann. Hierbei können einzelne Faserlagen im Faserverbundbereich eine einzelne Faser oder mehrere gleiche oder unterschiedliche Fasern umfassen.

Der Begriff "thermoplastisches Material" bezeichnet Kunststoffe, die sich in einem bestimmten Temperaturbereich (thermo-plastisch) verformen lassen. Dieser Vorgang ist reversibel, das heißt, er kann durch Abkühlung und Wiedererwärmung bis in den schmelzflüssigen Zustand beliebig oft wiederholt werden, solange nicht durch Überhitzung die sogenannte thermische Zersetzung des Materials einsetzt. Darin unterscheiden sich Thermoplaste von den Duroplasten (oder Duromeren) und Elastomeren. Ein weiteres Alleinstellungsmerkmal ist die Schweißbarkeit von Thermoplasten im Gegensatz zu beispielsweise Duromeren.

Unter dem Begriff "rohrförmig" wird hier eine Form verstanden, die zumindest im Wesentlichen der eines im Wesentlichen kreisrunden Rohres, insbesondere der eines Rohres mit im Wesentlichen konstanten Innen- bzw. Außendurchmessern, entspricht. Insbesondere ist wesentliches Merkmal des rohrförmigen Liners, dass er von einem im Rahmen der üblichen Fertigungstoleranzen kreisrunden Rohr ablängbar ist, unabhängig davon, ob die Durchmesser des Rohres in einem späteren Fertigungsschritt abschnittsweise oder komplett nochmals verändert werden.

Ein erfindungsgemäßer Hybriddruckbehälter verzichtet damit beim Liner auf die aus dem Stand der Technik bekannten Polkappen. Insbesondere ist der Außendurchmesser des erfindungsgemäßen Hybriddruckbehälters von dem Boss bestimmt, der wegen der Notwendigkeit, ein Ventil aufnehmen zu müssen, einen gewissen Mindestdurchmesser aufweisen muss. Insbesondere liegt bei dem erfindungsgemäßen Hybriddruckbehälter der Lineraußendurchmesser in der Größenordnung des Außendurchmessers des Boss. Damit ist der erfindungsgemäße Hybriddruckbehälter auch in kleine Einbauräume beispielsweise eines Fahrzeugs einbaubar. Darüber hinaus ist der Liner sehr einfach herstellbar, da seine Form keine wirkliche dreidimensionale Form darstellt. Der rohrförmige Liner weist einen im Wesentlichen kreisrunden Querschnitt als zweidimensionale Form auf, wobei seine dritte Dimension nur durch einen Parameter, nämlich die Länge, beschrieben werden kann. Damit muss ein solcher Liner nicht zwingend mit den im Stand der Technik für die Linerherstellung üblichen Verfahren wie Blasformen, Rotomoulding oder Schweißen einzelner Komponenten hergestellt werden. Vielmehr bieten sich auch einfachere Herstellverfahren, wie Extrusion, Pultrusion oder Fließdrucken an. Mit solchen Verfahren können entsprechende Halbzeuge auch in sehr großen Längen sehr genau und wirtschaftlich hergestellt werden, wobei der rohrförmige Liner durch einfaches Ablängen aus solchen Halbzeugen herstellbar ist.

Durch das Durchmesserverhältnis mit einem größeren Außendurchmesser des Boss gegenüber dem Außendurchmesser des Liners kann eine definierte Ablage der zur Verstärkung des Behälters erforderlichen Verstärkungsfasern in Umfangsrichtung erfolgen, bis der Außendurchmesser des Boss erreicht ist. Dies ist belastungsbedingt vorteilhaft, da die Umfangslagen optimaler Weise auf der Innenseite des Laminates positioniert werden sollen. Der Übergang zwischen dem Liner und der Außenkontur des Boss kann harmonisch und damit lastgerecht erfolgen.

Gemäß der Erfindung ist der Liner aus einem unter Druck zumindest teilweise plastisch verformbaren Material gefertigt, wobei der Hybriddruckbehälter weiterhin mindestens eine auf den Liner zu dessen Verstärkung aufgebrachten Außenschicht und einen Boss mit Quetschring und Gegenstück zur Aufnahme des Ventils und zur Abdichtung des Speichervolumens gegenüber dem Liner aufweist, wobei der Liner zum Anschließen des Boss einen zylinderförmigen Anschlußbereich mit einer Außenseite und einer Innenseite umfasst, wobei der Quetschring an einer Seite des Anschlußbereichs des Liners und das Gegenstück zur Erzeugung eines Abdichtdrucks zwischen Quetschring, Anschlußbereich des Liners und Gegenstück auf einer anderen Seite des Anschlußbereichs des Liners positioniert ist, wobei das Gegenstück auf seiner zum Anschlußbereich des Liners ausgerichteten Seite eine geeignet geformte Nut mit einer dem Speichervolumen zugewandten ersten Kante und einer in entgegengesetzter Richtung vorhandenen zweiten Kante mit einem darin aufgenommenen unter dem Abdichtdruck abdichtenden Dichtungsrings aufweist, wobei die Nut und der Dichtungsring so dimensioniert sind und das Linermaterial dazu vorgesehen ist, unter dem Abdichtdruck aufgrund seiner plastischen Verformbarkeit zumindest in beiden Lücken zwischen Dichtungsring und erster sowie zweiter Kante hineinragende erste und zweite Dichtungswülste auszubilden.

Der Innenbehälter ist hier mehrteilig zumindest aus dem rohrförmigen Liner und den Bossen an den Stirnseiten des rohrförmigen Liners zusammengesetzt. Zumindest einer der Bosse ist dazu ausgebildet, ein Ventil zum Befüllen bzw. zur Medienentnahme aus dem Hybriddruckbehälter, aufzunehmen. Der Boss auf der gegenüberliegenden Seite kann als geschlossener Boss ausgebildet sein.

Das plastisch verformbaren Innenbehältermaterial hat die Eigenschaft, zwar in sich fest und stabil zu sein, allerdings mit einer gewissen Fließfähigkeit ausgestattet zu sein, sodass es sich zumindest an seiner Oberfläche unter hohem Druck plastisch verformen und somit an die Kontur der drückenden Flächen anpassen kann, ohne aber dabei großflächige Verformungen entstehen zu lassen. Der Innenbehälter hat zudem die Funktion, ein gasdichtes Speichervolumen für die Speicherung von Füllgas im Druckbehälter bereitzustellen, so dass das Innenbehältermaterial gasdicht sein sollte, beispielweise Metall oder Kunststoff, als Kunststoff vorzugsweise PA oder PE, als Einzelschicht oder als Mehrfachschichtsystem. Das Füllgas kann dabei ein beliebiges Gas sein, beispielsweise Wasserstoff. Insbesondere kann wegen der einfachen Fertigungsmethoden für das Linerhalbzeug auch ein Werkstoff gewählt werden, der sich für die im Stand der Technik bewährten Verfahren wie Blasformen, Rotomoulding oder Schweißen nicht eignet. Solche Werkstoffe, wie beispielsweise UHMW-PE (ultrahochmolekulares Polyethylen) oder PET können beispielsweise auch bessere Permeationseigenschaften und/oder bessere Temperatureigenschaften, insbesondere bessere Tieftemperatureigenschaften, sowie geringere Wasseraufnahme als die für Liner bekannten Werkstoffe aufweisen. Die Außenschicht verleiht dem Druckbehälter eine mechanische Stabilität, sodass die Funktionalität der Gasundurchlässigkeit und Druckfestigkeit auf die zwei Komponenten Innenbehälter und Außenschicht separiert wurde. Die Außenschicht kann beispielsweise eine Faserverbundschicht sein, die auf den Innenbehälter gewickelt oder mit anderen Techniken aufgebracht wurde.

Der in der Nut positionierte Dichtungsring füllt die Nut in dem Gegenstück nicht vollständig aus, sondern lässt in der Nut auf beiden Seiten zur Innenseite des Gegenstücks Lücken, eine erste und zweite Lücke, die für die Bereitstellung einer Redundanz in der Dichtwirkung verwendet werden. Die Ausgestaltung der Komponenten des Boss stellen in Verbindung mit der geeigneten Fließfähigkeit des Innenbehältermaterials und die dadurch bewirkte Ausbildung der Dichtungswülste sicher, dass für den Druckbehälter eine verbesserte Abdichtwirkung mit gleichzeitiger Positionssicherheit der Komponenten des Boss im Druckbehälter gewährleistet ist. Zudem bleibt der Dichtungsring bei Druckwechsel durch die beiden Dichtungswülste dauerstabil in der Nut. Dieses Dichtungskonzept stellt eine Dreifach-Redundanz zum Abdichten des Speichervolumens dar, indem eine Abdichtung von (i) erster Dichtungswulst der Auswölbung gegen das Gegenstück, (ii) Quetschring über den Anschlußbereich des Liners auf Dichtungsring und (iii) zweiter Dichtungswulst des Liners im Anschlußbereich gegen den Boss eine dreifache Abdichtung in Reihe bereitstellt und somit die Zuverlässigkeit und Dauerhaftigkeit der Abdichtung enorm verbessert. Durch die Ausbildung der Dichtungswülste aufgrund des durch den Boss ausgeübten Abdichtdruck ist der Boss somit zusätzlich selbstabdichtend. Das Dichtungskonzept ist dabei unabhängig vom Material des Quetschrings und des Boss, wobei die Materialien für Quetschring und Boss allerdings eine zumindest geringfügigere Fließfähigkeit als das Innenbehältermaterial aufweisen.

Der spezifizierte Druckbehälter ist durch das erfindungsgemäße Dichtungskonzept sehr flexibel aufgebaut, sodass kundenspezifische Bosse über entsprechende Formung des Quetschrings leicht zu adaptieren sind. Zusätzlich ist eine Integration einer zusätzlichen Hülse zur Integration von Sensorik, Messfühlern oder anderer in den Druckbehälter ragenden Bauteil weiterhin möglich.

In einer weiteren vorteilhaften Ausführungsform ist der Quetschring an der Innenseite des Anschlußbereichs des Liners und das Gegenstück zur Erzeugung eines Abdichtdrucks zwischen Quetschring, Anschlußbereich des Liners und Gegenstück auf der Außenseite des Anschlußbereichs des Liners positioniert.

Das Prinzip lässt sich aber auch umkehren. In einer alternativen Ausführungsform ist der Quetschring an der Außenseite des Anschlußbereichs des Liners und das Gegenstück zur Erzeugung eines Abdichtdrucks zwischen Quetschring, Anschlußbereich des Liners und Gegenstück auf der Innenseite des Anschlußbereichs des Liners positioniert. Bei dieser Ausführungsform kommt allerdings das Dichtkonzept, in dem vorgesehen ist, dass das im Druckbehälter befindliche Gas die Stirnfläche des Linerrohrs umströmt und damit zur Dichtwirkung beiträgt, nicht zur Anwendung.

In einer Ausführungsform ist der Quetschring so dimensioniert, dass das Innenbehältermaterial aufgrund seiner plastischen Verformbarkeit einen dritten Wulst um den Quetschring auf seiner zum Speichervolumen hin gerichteten Unterseite auszubilden. Dadurch wird ein Verrutschen des Quetschring in Richtung des Speichervolumens verhindert. Dadurch wird der Abdichtdruck auf den Dichtungsring wie ursprünglich eingestellt aufrechterhalten. Außerdem kann so der Quetschring nicht mehr bei Erschütterung des Druckbehälters in das Speichervolumen hineinrutschen oder gar hineinfallen.

In einer weiteren Ausführungsform ist der Quetschring oder das Gegenstück so geformt, dass zwischen dem Speichervolumen und einer Oberseite des Anschlußbereichs des Liners eine offene Gasverbindung zum Speichervolumen besteht. Damit liegt der Innendruck im Speichervolumen auch oben an dem Anschlußbereich des Liners an.

In einer weiteren Ausführungsform umfasst der Quetschring eine dem Anschlußbereich des Liners zugewandten Außenseite und eine entgegengesetzte Innenseite, wobei die Fläche der auf dem Anschlußbereich des Liners aufliegenden Außenseite des Quetschrings kleiner ist als dessen Innenseite. Durch das unterschiedliche Flächenverhältnis zwischen Innenseite und Außenseite bei vorhandener Gasverbindung zwischen Speichervolumen und Oberseite der des Anschlußbereichs des Liners wird der Abdichtdruck durch den Innendruck im Speichervolumen des Druckbehälters zusätzlich verstärkt und der Quetschring bei Druckanstieg im Speichervolumen (beispielsweise bei der Befüllung des Speichervolumens mit der Gasfüllung, z.B. bis 500 bar) zusätzlich in Richtung des Gegenstücks gepresst, was die Dichtwirkung und deren Zuverlässigkeit noch weiter verbessert.

Die Nut kann eine Kontur umfassen, die an eine Form des Dichtungsrings im unbelasteten Zustand angepasst ist. Damit können sich hinter dem Dichtungsring keine undefinierten Hohlräume mehr bilden, sodass die Dichtwirkung des Dichtungsrings weiter verbessert wird.

Der Dichtungsring kann ein O-Ring sein. O-Ringe bieten einerseits zuverlässige Abdichteigenschaften und andererseits lassen sich für O-Ringe am einfachsten geeignete Konturen in der Nut nachbilden. Hierbei ist die Krümmung der Nut an die Krümmung der Oberfläche des O-Rings angepasst. Der Dichtungsring beziehungsweise der O-Ring können dabei aus allen für die Gasabdichtung geeigneten Materialien bestehen.

Der Boss kann ein zusätzliches Sicherungselement umfassen, das den Quetschring und das Gegenstück miteinander verbindet. Damit wird ein Verrutschen des Quetschrings relativ zum Gegenstück, insbesondere in Richtung des Gegenstücks, verhindert.

Das Sicherungselement kann im Gegenstück gelagert sein und zumindest auf seiner dem Quetschring zugewandten Seite ein Gewinde umfassen, das zum Eingriff in die Oberseite des Quetschring vorgesehen ist. Das Sicherungselement kann beispielsweise eine Hohlschraube oder ein entsprechend geformter Ring mit Durchlassöffnungen für die Druckbeaufschlagung der Oberseite des Anschlußbereichs des Liners sein.

Das Gegenstück des Ventilanschlussstücks kann ein Verbindungsmittel zur druckstabilen Aufnahme des Ventils umfassen. Beispielsweise wird ein Ventil in ein entsprechendes Gewinde als Verbindungsmittel des Gegenstücks druckstabil eingeschraubt.

In einer weiteren vorteilhaften Ausführungsform weist Gegenstück auf seiner zum Anschlußbereich des Liners ausgerichteten Seite mindestens eine weitere geeignet geformte Nut zur Aufnahme axialer Kräfte auf. Hierdurch lassen sich axiale Kräfte sehr einfach aufnehmen, da das Gegenstück leicht mit der zusätzlichen Nut konstruiert werden kann.

Der Liner kann aus einem thermoplastischen Werkstoff gefertigt sein. Thermoplastische Werkstoffe bieten sich an, da sie leicht und kostengünstig zu einem Rohrhalbzeug verarbeitbar sind. Der Liner kann beispielsweise aus den HDPE, PA, UHMW-PE oder PET gefertigt werden

Alternativ kann der thermoplastische Linerwerkstoff auch ein faserverstärkter Thermoplast sein. In einer Ausführungsform können die Verstärkungsfasern Kohlenstoffasern sein.

Alternativ kann der Liner aus einem duroplastischen Werkstoff, insbesondere aus einem faserverstärkten duroplastischen Werkstoff, gefertigt sein. Der erfindungsgemäße Hybriddruckbehälter weist einen rohrförmigen Liner auf. Rohrförmige Liner bzw. Linerhalbzeuge aus duroplastischen Werkstoffen lassen sich beispielsweise im Pultrusionsverfahren relativ einfach herstellen. Damit ist es erstmals möglich, duroplastische Liner kostengünstig vorzusehen. Duroplastische Liner können Vorteile hinsichtlich Festigkeit und Permeabilität aufweisen.

Die Erfindung betrifft des Weiteren ein Verfahren zur Herstellung eines erfindungsgemäßen Hybriddruckbehälters, wobei das Verfahren die Schritte
1) Bereitstellen eines vorgefertigten rohrförmigen Liners,
2) Einsetzen des Quetschrings in oder auf den Anschlußbereich des Liners,
3) Ausbilden zumindest von ersten und zweiten Dichtungswülsten, die unter dem Abdichtdruck bei entsprechend dimensionierter Nut und Dichtungsring aufgrund der plastischen Verformbarkeit des Linermaterials in beide Lücken zwischen Dichtungsring und erster Kante bzw. zweiter Kante zur Abdichtung des späteren Speichervolumens hineinragen,
4) Herstellen der Außenschicht auf dem Liner, und
5) Einsetzen des Ventils (5) in den Boss (4).

Mit dem erfindungsgemäßen Herstellverfahren ist ein Hybriddruckbehälter in effizienter Weise herstellbar, wobei der Außendurchmesser des Hybriddruckbehälters von dem Boss bestimmt wird. Insbesondere kann bei dem erfindungsgemäßen Hybriddruckbehälter der Lineraußendurchmesser in der Größenordnung des Außendurchmessers des Boss liegen, womit er auch in kleine Einbauräume beispielsweise eines Fahrzeugs einbaubar ist. Die Form des Liners stellt keine wirkliche dreidimensionale Form dar. Der rohrförmige Liner weist einen im Wesentlichen kreisrunden Querschnitt als zweidimensionale Form auf, wobei seine dritte Dimension nur durch einen Parameter, nämlich die Länge, beschrieben werden kann. Damit muss ein solcher Liner nicht zwingend mit den im Stand der Technik für die Linerherstellung üblichen Verfahren wie Blasformen, Rotomoulding oder Schweißen einzelner Komponenten hergestellt werden. Vielmehr bieten sich auch einfachere Herstellverfahren, wie Extrusion, Pultrusion oder Fließdrucken an. Mit solchen Verfahren können entsprechende Halbzeuge auch in sehr großen Längen sehr genau und wirtschaftlich hergestellt werden, wobei der rohrförmige Liner durch einfaches Ablängen aus solchen Halbzeugen herstellbar ist.

In einer weiteren vorteilhaften Ausführungsform umfasst das Verfahren den weiteren Schritt des Ausbildens einer dritten Wulst um den Quetschring auf seiner zum Speichervolumen hin gerichteten Unterseite aufgrund der plastischen Verformbarkeit des Linermaterials.

In einer weiteren vorteilhaften Ausführungsform weist die Außenschicht eine innere Lage und eine äußere Lage auf, wobei die äußere Lage über die innere Lage und den Boss gewickelt wird. Durch die Aufteilung in separate Lagen kann jede Lage aus einem unterschiedlichen Werkstoff hergestellt werden. Die äußere Lage ist dabei eine Faserverbundlage.

In einer weiteren vorteilhaften Ausführungsform ist das vorgefertigte Rohrhalbzeug der inneren Lage ein Faserverbundrohr, wobei das Faserverbundrohr mit Umfangslagen gewickelt ist, wobei die Umfangslagen ein von innen nach außen zunehmenden Winkel gegenüber der Längsachse des Faserverbundrohrs aufweisen. Die Wickelwinkel können beispielsweise können beispielsweise von innen über 80°, 84° und 88° nach außen zunehmen. Damit wird die Auslastung des Umfangspakets homogenisiert. Das lässt sich beispielsweise durch die Veränderung der Rovingzahl erreichen.

Es ist auch möglich, die innere Lage separat herzustellen, beispielsweise als Rohr vorzufertigen, was Vorteile bezüglich der Geradheit und der Rundheit bietet, insbesondere wenn die innere Lage ebenfalls als Faserverbundlage gewickelt wird, da sie auf einem präzisen metallischen Wickeldorn gefertigt werden kann.

Das zylindrische Rohrhalbzeug kann extrudiert werden.

Das zylindrische Rohrhalbzeug kann auch pultrudiert oder im im Fließdrückverfahren hergestellt werden.

Alle diese Herstellungsverfahren haben sich je nach zu verarbeitendem Werkstoff als effizient erwiesen. Der Fachmann kennt die Verfahren und kann ein für den zu verarbeitenden Werkstoff geeignetes Auswählen.

In einer weiteren vorteilhaften Ausführungsform wird der rohrförmige Liner von einem zylindrischen Rohrhalbzeug abgelängt. Mit anderen Worten wird in einer Vorfertigung nicht der rohrförmige Liner, sondern ein längeres entsprechendes Rohr als Halbzeug hergestellt, von dem der rohrförmige Liner abgelängt wird. Die Herstellung des längeren Halbzeugs bietet Effizienzvorteile gegenüber der Einzelurformung des rohrförmigen Liners.

In einer weiteren vorteilhaften Ausführungsform wird die äußere Lage aus einem FVM gewickelt, wobei die äußere Lage mit Wickelwinkeln zwischen 30° und 90°, bevorzugt zwischen 35° und 90°, besonders bevorzugt zwischen 40° und 90° gegenüber der Längsachse des Liners gewickelt wird. Aufgrund des Verhältnisses des Außendurchmessers des Liners bzw. Behälters zum Hals des Bosses ergeben sich im zweiten zu wickelnden Laminatpaket Wickelwinkel, die eine Konsolidierung durch weitere Umfangslagen nicht erfordern. Da der Boss in dieser Ausführungsform den Innendruck vollständig aufnimmt, brauchen die Fasern des zweiten Laminatpaketes nur die durch den Innendruck entstehenden axialen Kräfte des Bosses aufnehmen, nicht die bei einem Typ 4 Behälter gemäß dem Stand der Technik entstehenden radialen Kräfte.

In einer weiteren vorteilhaften Ausführungsform wird der rohrförmige Liner in seinem Anschlußbereich eingeschnürt wird. Die Einschnürung kann beispielsweise durch Temperatureinwirkung geschehen, wobei die Einschnürung zylindrisch oder konisch erfolgen kann. Durch die Einschnürung kann etwas mehr Wanddicke im Außenbereich des Bosses zur Aufnahme des Liners gewonnen werden.

In einer weiteren vorteilhaften Ausführungsform wird der Quetschring mittels einer Montagevorrichtung in seine Position gebracht. Bei innenliegendem Quetschring kann der Quetschring über die Montagevorrichtung beispielsweise durch den Boss in seine Position gebracht werden, was die Montage vereinfacht.

In einer weiteren vorteilhaften Ausführungsform wird der Quetschring vor der Montage einer Temperaturbehandlung unterzogen, sodass der Quetschring eine große Temperaturdifferenz zu dem Liner im Moment der Montage aufweist, wobei durch die Temperaturdifferenz der Quetschrings mit Spiel auf den Liner aufgesetzt bzw. in den Liner eingeführt wird, wobei der Quetschring zu seiner gewünschten Position gebracht wird, wo er durch die Angleichung seiner Temperatur an die Temperatur des Liners den Liner quetscht. Dabei kann das Verbringen des Quetschrings in seine finale Position beispielsweise durch ein Senkrechtstellen des Hybriddruckbehälters und Absenken des Quetschrings in die finale Position durch Schwerkraft erfolgen. Bei Verwendung magnetischer Werkstoffe für den Quetschring ist auch bei innenliegendem Quetschring Verbringung durch Magnete von außen bis zur finalen Position denkbar. Auch hierdurch wird die Montage vereinfacht.

Die voranstehend aufgelisteten Ausführungsformen können einzeln oder in beliebiger Kombination abweichend von den Rückbezügen in den Ansprüchen zueinander zur Ausgestaltung der erfindungsgemäßen Vorrichtungen verwendet werden.

### Kurze Beschreibung der Abbildungen

Diese und andere Aspekte der Erfindung werden im Detail in den Abbildungen wie folgt gezeigt.
- **Fig.1:**: zeigt einen Ausschnitt eines erfindungsgemäßen Hybriddruckbehälters im Schnitt;
- **Fig.2:**: zeigt eine schematische Darstellung eines Dichtungskonzepts;
- **Fig.3:**: zeigt einen Ausschnitt einer weiteren Ausführungsform des erfindungsgemäßen Hybriddruckbehälters im Schnitt;
- **Fig.4:**: zeigt einen Ausschnitt einer weiteren Ausführungsform des erfindungsgemäßen Hybriddruckbehälters im Schnitt.

### Detaillierte Beschreibung der Ausführungsbeispiele

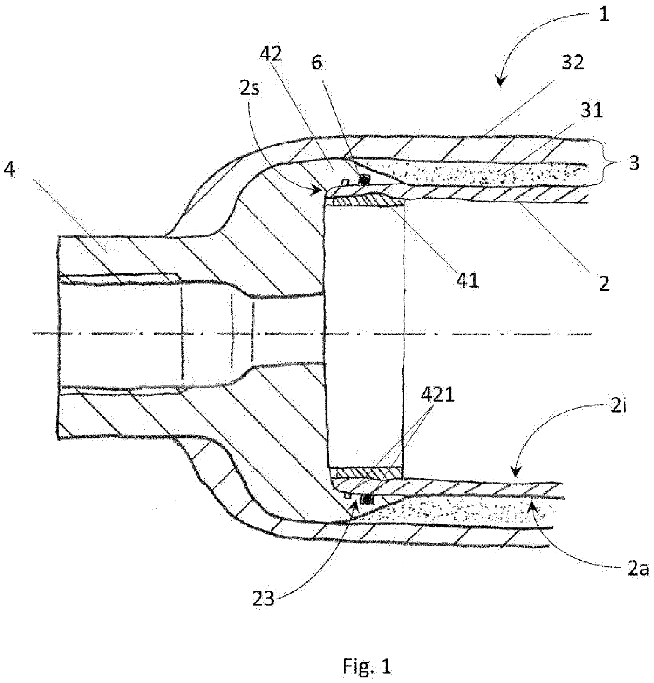

Fig.1 zeigt einen Ausschnitt eines erfindungsgemäßen Hybriddruckbehälters 1 im Schnitt. Der Hybriddruckbehälter weist einen rohrförmigen Liner 2 auf, der von einer inneren Lage 31 und einer äußeren Lage 32 einer Außenschicht 3 überdeckt ist. Dabei ist die innere Lage 31 der Außenschicht ebenfalls rohrförmig gestaltet. Die Stirnfläche der inneren Lage 31 stößt an einen Gegenstück 42 des Boss 4, der den Abschluß des Hybriddruckbehälters 1 darstellt. Der Boss 4 ist aus einem metallischen Werkstoff gefertigt. Über die innere Lage 31 der Außenschicht ist die äußere Lage 32 gewickelt, wobei diese äußere Lage auch den Boss 4 teilweise überdeckt, so dass der Boss 4 fest mit dem rohrförmigen Liner 2 und der inneren Lage 31 der Außenschicht 3 verbunden ist. Der Außendurchmesser des Hybriddruckbehälters 1 ist von dem Außendurchmesser des Boss 4 bestimmt, der wegen der Notwendigkeit, ein Ventil 5 (in der Fig. Nicht gezeigt) aufnehmen zu müssen, einen gewissen Mindestdurchmesser aufweisen muss. Insbesondere liegt der Außendurchmesser des Liners 2 in der Größenordnung des Außendurchmessers des Boss 4. Durch das Durchmesserverhältnis mit einem größeren Außendurchmesser des Boss 4 gegenüber dem Außendurchmesser des Liners 2 kann eine definierte Ablage der zur Verstärkung des Behälters erforderlichen Verstärkungsfasern der inneren Lage 31, der Außenschicht 3, sofern sie ein Faserverbundrohr ist, in Umfangsrichtung erfolgen, bis der Außendurchmesser des Boss 4 erreicht ist. Dies ist belastungsbedingt vorteilhaft, da die Umfangslagen optimaler Weise auf der Innenseite des Laminates positioniert werden sollen. Der Übergang zwischen dem Liner 2 und der Außenkontur des Boss 4 kann harmonisch und damit lastgerecht erfolgen. Innen im Anschlußbereich 23 des Liners 2 befindet sich ein Quetschring 41, der den Liner 2 in seinem Anschlußbereich 23 gegen das Gegenstück 42 des Boss 4 quetscht. Im Gegenstück 42 sind mindestens zwei Nuten 421 eingebracht. In einer dieser Nuten 421 befindet sich ein O-Ring als Dichtungsring 6.

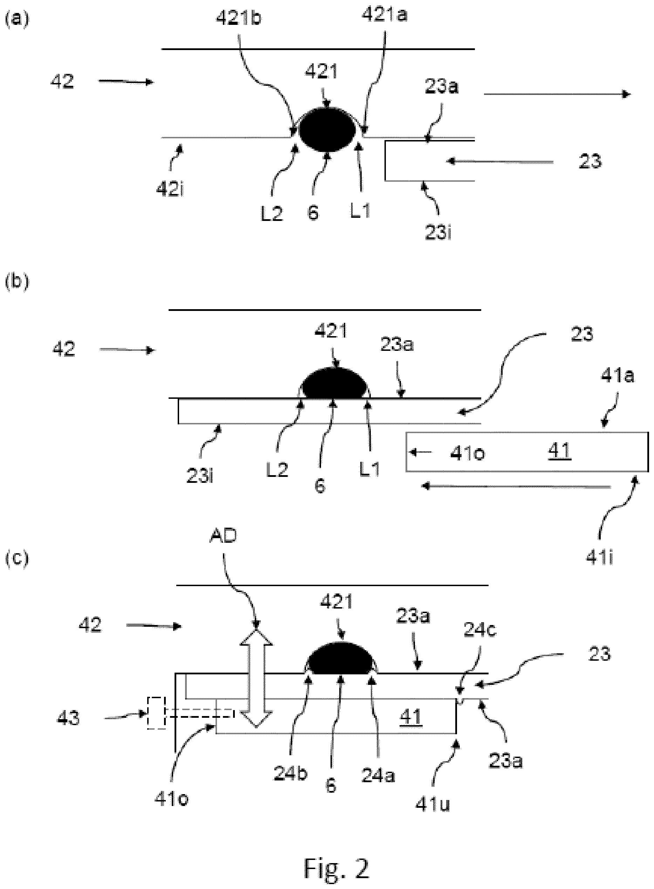

Fig. 2 zeigt eine schematische Darstellung des Dichtungskonzepts mit Gegenstück 42, Anschlußbereich 23 des Boss 2, Quetschring 41 und den ausgebildeten Dichtungswülsten 24a, 24b, 24c. In Fig.2a wird das Gegenstück 42 mit seiner Innenseite 42i auf die Außenseite 23a des Anschlußbereichs 23 geschoben. Der Dichtungsring 6, hier als O-Ring ausgeführt, sitzt in der Nut 421, wobei zwischen den Kanten 421a und 421b jeweils Lücken L1 und L2 existieren, in denen kein Material des O-Rings 6 ist. Zusätzlich besitzt die Nut 421 eine Kontur, die an eine Form des O-Rings 6 im unbelasteten Zustand angepasst ist, damit sich dieser beim Aufschieben des Gegenstücks 42 nicht verdrillt. Nach Aufschieben des Gegenstücks 42 auf den Anschlußbereich 23 wird der O-Ring 6 komprimiert, sodass sich die Lücken L1 und L2 zwar verkleinern, aber durch eine entsprechende Dimensionierung der Nut 421 und des O-Rings 6 weiter vorhanden sind. Zu diesem Zeitpunkt bilden sich noch keine Dichtungswülste aus, da der dafür notwendige Abdichtdruck AD erst nach Positionierung des Quetschrings 41 von Innen auf Anschlußbereich 23 erzeugt wird. Wie in Fig.2b gezeigt ist, wird nun der Quetschring 41 mit seiner Außenseite 41a von Innen auf die Innenseite 23i des Anschlußbereichs 23 geschoben. Diese beiden Schritte (Aufschieben des Gegenstücks 42 und Einschieben des Quetschrings 41) können auch in umgekehrter Reihenfolge ausgeführt werden, wobei das in Fig.2c gezeigte Resultat das Gleiche wäre. Nachdem der Quetschring 41 an seiner vorgesehenen Stelle auf der Innenseite 23i des Anschlußbereichs 23 positioniert ist, wirkt der Abdichtdruck AD zwischen Quetschring 14, Anschlußbereich 23 und Gegenstück 42. Durch den Abdichtdruck AD bei geeignet dimensionierter Nut 241 und O-Ring 6 bilden sich aufgrund der plastischen Verformbarkeit des Linermaterials nun in beiden vorhandenen Lücken L1, L2 zwischen O-Ring 6 und erster sowie zweiter Kante 421a, 421b in diese Lücken L1, L2 hineinragende erste und zweite Dichtungswülste 24a, 24b aus, die zusammen mit der konventionellen Dichtung (O-Ring-zu Anschlußbereich) eine freifach-redundante Abdichtung des Speichervolumens SV gegen die Außenseite des Druckbehälters 1 darstellen. Außerdem ist der Quetschring 41 hier so dimensioniert, dass das Linermaterial aufgrund seiner plastischen Verformbarkeit zusätzlich einen dritten Wulst 24c um den Quetschring 41 auf seiner zum Speichervolumen SV hin gerichteten Unterseite 41u ausbildet. Mit diesem dritten Wulst 24c wird die dreifach-redundante Abdichtung insofern unterstützt, als dass der Quetschring durch den dritten Wulst 24c in seiner Position gehalten wird und somit nicht in den Liner hineinrutschen oder gar hineinfallen kann. Zusätzlich ist in Fig.2c eine Ausführungsform angedeutet (gestrichelt gezeigt), wo der Boss 4 ein zusätzliches Sicherungselement 43 umfasst, das den Quetschring 41 und das Gegenstück 42 miteinander verbindet. Dieses Sicherungselement 43 ist als Schraube im Gegenstück 42 gelagert, deren Gewinde mit einem entsprechenden Loch in der Oberseite 41o des Quetschrings 41 eine feste Verbindung herstellt.

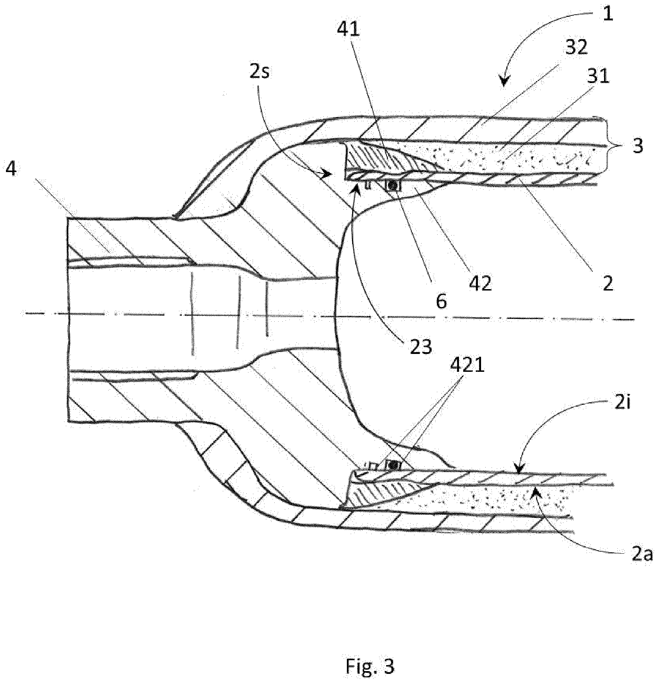

In Fig. 3 ist die Situation aus Fig. 1 in umgekehrter Anordnung gezeigt, d.h. der Quetschring 41 sitzt außen auf dem Anschlußbereich 23 des Liners 2, während das Gegenstück 42 des Boss nun innen in den Anschlußbereich 23 des Liners 2 hineinragt. Die Beschreibung aus Fig. 1 ist hier entsprechend umgekehrt zu lesen.

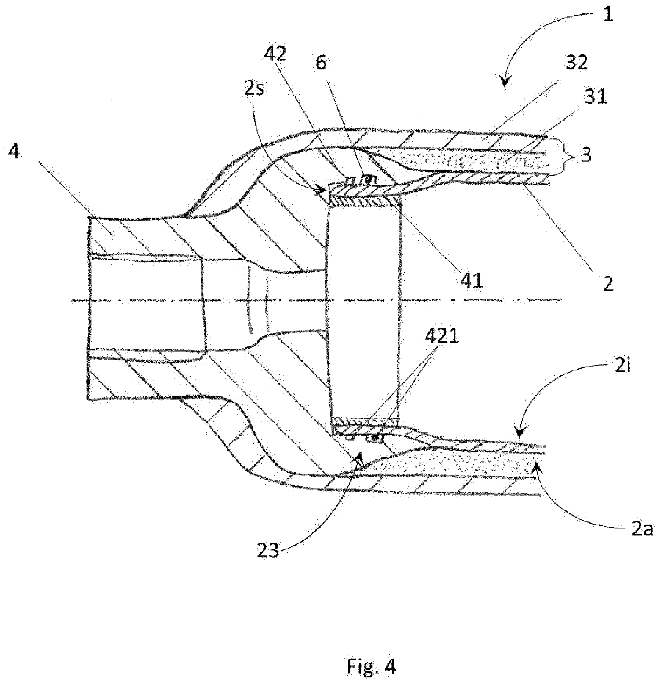

In Fig. 4 ist wiederum im Prinzip die Situation aus Fig. 1 dargestellt, wobei der Liner 2 in seinem Anschlußbereich 23 eingeschnürt ist. Die Einschnürung kann beispielsweise durch Temperatureinwirkung geschehen, wobei die Einschnürung hier zylindrisch erfolgt ist. Durch die Einschnürung kann etwas mehr Wanddicke im Außenbereich des Bosses zur Aufnahme des Liners gewonnen werden. Die übrige Beschreibung der Fig. 1 trifft auch für Fig. 4 zu.

### Bezugszeichenliste

- 1: Hybridruckbehälter
- 2: Liner
- 2i: Innenseite des Liners
- 2a: Außenseite des Liners
- 2s: Stirnfläche des Linerrohrs
- 23: Anschlußbereich des Liners
- 23i: Innenseite des Anschlußbereichs des Liners
- 23a: Außenseite des Anschlußbereichs des Liners
- 23o: Oberseite des Anschlußbereichs des Liners
- 24a: erste Dichtungswulst
- 24b: zweite Dichtungswulst
- 24c: dritte Wulst
- 3: Außenschicht
- 31: Innere Lage der Außenschicht
- 32: Äußere Lage der Außenschicht
- 4: Boss
- 41: Quetschring
- 41a: Erste Seite des Quetschrings
- 41i: Zweite Seite des Quetschrings
- 41o: Oberseite des Quetschrings
- 41u: Unterseite des Quetschrings
- 42: Gegenstück
- 42i: Innenseite des Gegenstücks
- 421: Nut
- 421a: erste Kante
- 421b: zweite Kante
- 43: Sicherungselement
- 5: Ventil
- 6: Dichtungsring
- AD: Abdichtdruck
- GV: Gasverbindung
- L1, L2: Lücken zwischen erster beziehungsweise zweiter Kante der Nut und dem Quetschring
- SV: Speichervolumen

## Patentansprüche

1. Hybriddruckbehälter (1) mit einem eine Innenseite (2i) und eine Außenseite (2a) aufweisenden Liner (2) aus Kunststoff mit einem maximalen Außendurchmesser (DL) und einen metallischen Boss (4) mit einem Außendurchmesser (DB), wobei der metallische Boss (4) dazu eingerichtet ist, ein Ventil (5) aufzunehmen, wobei der Hybriddruckbehälter in seinem Inneren ein Speichervolumen (SV) aufweist, wobei der Liner rohrförmig ausgeführt ist, wobei der Außendurchmesser (DB) des Boss mindestens genauso groß ist wie der maximale Außendurchmesser (DL) des Liners, wobei der Liner (2) aus einem unter Druck zumindest teilweise plastisch verformbaren Kunststoffmaterial gefertigt ist, der Hybriddruckbehälter weiterhin mindestens eine auf den Liner (2) zu dessen Verstärkung aufgebrachten Außenschicht (3) und einen Boss (4) mit Quetschring (41) und Gegenstück (42) zur Aufnahme des Ventils (5) und zur Abdichtung des Speichervolumens gegenüber dem Liner (2) aufweist, wobei der Liner (2) zum Anschließen des Boss (4) einen zylinderförmigen Anschlußbereich (23) mit einer Außenseite (23a) und einer Innenseite (23i) umfasst, wobei der Quetschring (41) an einer Seite (23i, 23a) des Anschlußbereichs (23) des Liners (2) und das Gegenstück (42) zur Erzeugung eines Abdichtdrucks (AD) zwischen Quetschring (41), Anschlußbereich (23) des Liners (2) und Gegenstück (42) auf einer anderen Seite (23a, 23i) des Anschlußbereichs (23) des Liners (2) positioniert ist, wobei das Gegenstück (42) auf seiner zum Anschlußbereich (23) des Liners (2) ausgerichteten Seite (42i) eine geeignet geformte Nut (421) mit einer dem Speichervolumen (SV) zugewandten ersten Kante (421a) und einer in entgegengesetzter Richtung vorhandenen zweiten Kante (421b) mit einem darin aufgenommenen unter dem Abdichtdruck (AD) abdichtenden Dichtungsring (6) aufweist, wobei die Nut (421) und der Dichtungsring (6) so dimensioniert sind und das Linermaterial dazu vorgesehen ist, unter dem Abdichtdruck (AD) aufgrund seiner plastischen Verformbarkeit zumindest in beiden Lücken (L1, L2) zwischen Dichtungsring (6) und erster sowie zweiter Kante (421a, 421b) hineinragende erste und zweite Dichtungswülste (24a, 24b) auszubilden.

2. Hybriddruckbehälter (1) gemäß Anspruch 1,
**dadurch gekennzeichnet,**
**dass** der Quetschring (41) an der Innenseite (23i) des Anschlußbereichs (23) des Liners (2) und das Gegenstück (42) zur Erzeugung eines Abdichtdrucks (AD) zwischen Quetschring (41), Anschlußbereich (23) des Liners (2) und Gegenstück (42) auf der Außenseite (23a) des Anschlußbereichs (23) des Liners (2) positioniert ist.

3. Hybriddruckbehälter (1) gemäß Anspruch 1,
**dadurch gekennzeichnet,**
**dass** der Quetschring (41) an der Außenseite (23a) des Anschlußbereichs (23) des Liners (2) und das Gegenstück (42) zur Erzeugung eines Abdichtdrucks (AD) zwischen Quetschring (41), Anschlußbereich (23) des Liners (2) und Gegenstück (42) auf der Innenseite (23i) des Anschlußbereichs (23) des Liners (2) positioniert ist.

4. Hybriddruckbehälter (1) gemäß einem der vorhergehenden Ansprüche,
**dadurch gekennzeichnet,**
**dass** der Quetschring (41) so dimensioniert ist, dass das Linermaterial aufgrund seiner plastischen Verformbarkeit einen dritten Wulst (24c) um den Quetschring (41) auf seiner zum Speichervolumen (SV) hin gerichteten Unterseite (41u) auszubilden.

5. Hybriddruckbehälter (1) gemäß einem der vorhergehenden Ansprüche,
**dadurch gekennzeichnet,**
**dass** der Quetschring oder das Gegenstück (42) so geformt ist, dass zwischen dem Speichervolumen (SV) und einer Oberseite (23o) des Anschlußbereichs (23) des Liners (2) eine offene Gasverbindung (GV) zum Speichervolumen (SV) besteht.

6. Hybriddruckbehälter (1) gemäß Anspruch 5,
**dadurch gekennzeichnet,**
**dass** der Quetschring (41) eine dem Anschlußbereich (23) des Liners (2) zugewandte erste Seite (41a) und eine entgegengesetzte zweite Seite (41i) umfasst, wobei die Fläche der auf dem Anschlußbereich (23) des Liners (2) aufliegenden Seite (41a, 41i) des Quetschrings (42) kleiner ist als dessen entgegengesetzte andere Seite (41i, 41a).

7. Hybriddruckbehälter (1) gemäß einem der vorhergehenden Ansprüche,
**dadurch gekennzeichnet,**
**dass** das Gegenstück (42) auf seiner zum Anschlußbereich (23) des Liners (2) ausgerichteten Seite (42i) mindestens eine weitere geeignet geformte Nut zur Aufnahme axialer Kräfte aufweist..

8. Verfahren zur Herstellung eines Hybriddruckbehälters (1) gemäß einem der vorangehenden Ansprüche, umfassend **die Schritte**
1) Bereitstellen eines vorgefertigten rohrförmigen Liners (2),
2) Einsetzen des Quetschrings (41) in oder auf den Anschlußbereich (23) des Liners (2),
3) Ausbilden zumindest von ersten und zweiten Dichtungswülsten (24a, 24b), die unter dem Abdichtdruck (AD) bei entsprechend dimensionierter Nut (421) und Dichtungsring (6) aufgrund der plastischen Verformbarkeit des Linermaterials in beide Lücken (L1, L2) zwischen Dichtungsring (6) und erster Kante (421a) bzw. zweiter Kante (421b) zur Abdichtung des späteren Speichervolumens (SV) hineinragen,
4) Herstellen der Außenschicht (3) auf dem Liner (2), und
5) Einsetzen des Ventils (5) in den Boss (4).

9. Verfahren gemäß Anspruch 8,
**dadurch gekennzeichnet,**
**dass** das Verfahren den weiteren Schritt des Ausbildens (180) einer dritten Wulst (24c) um den Quetschring (41) auf seiner zum Speichervolumen (SV) hin gerichteten Unterseite (41u) aufgrund der plastischen Verformbarkeit des Linermaterials umfasst.

10. Verfahren gemäß Anspruch 8 oder 9,
**dadurch gekennzeichnet,**
**dass** die Außenschicht (3) eine innere Lage (31) und eine äußere Lage (32) aufweist, wobei die äußere Lage (32) über die innere Lage (31) und den Boss (4) gewickelt wird.

11. Verfahren gemäß Anspruch 10,
**dadurch gekennzeichnet,**
**dass** das vorgefertigte Rohrhalbzeug der inneren Lage (31) ein Faserverbundrohr ist, wobei das Faserverbundrohr mit Umfangslagen gewickelt ist, wobei die Umfangslagen ein von innen nach außen zunehmenden Winkel gegenüber der Längsachse des Faserverbundrohrs aufweisen.

12. Verfahren gemäß einem der Ansprüche 10 oder 11,
**dadurch gekennzeichnet,**
**dass** der rohrförmige Liner (2) von einem zylindrischen Rohrhalbzeug abgelängt wird.

13. Verfahren gemäß einem der Ansprüche 10 bis 12,
**dadurch gekennzeichnet,**
**dass** die äußere Lage (32) aus einem FVM gewickelt wird, wobei die äußere Lage (32) mit Wickelwinkeln zwischen 30° und 90°, bevorzugt zwischen 35° und 90°, besonders bevorzugt zwischen 40° und 90° gegenüber der Längsachse des Liners (2) gewickelt wird.

14. Verfahren gemäß einem der Ansprüche 10 bis 13,
**dadurch gekennzeichnet,**
**dass** der rohrförmige Liner (2) in seinem Anschlußbereich (23) eingeschnürt wird.

15. Verfahren gemäß einem der Ansprüche 10 bis 14,
**dadurch gekennzeichnet,**
**dass** der Quetschring (41) mittels einer Montagevorrichtung in seine Position gebracht wird.

16. Verfahren gemäß einem der Ansprüche 10 bis 15,
**dadurch gekennzeichnet,**
**dass** der Quetschring (41) vor der Montage einer Temperaturbehandlung unterzogen wird, sodass der Quetschring (41) eine große Temperaturdifferenz zu dem Liner im Moment der Montage aufweist, wobei durch die Temperaturdifferenz der Quetschrings mit Spiel auf den Liner (2) aufgesetzt bzw. in den Liner (2) eingeführt wird, wobei der Quetschring (41) zu seiner gewünschten Position gebracht wird, wo er durch die Angleichung seiner Temperatur an die Temperatur des Liners (2) den Liner (2) quetscht.

## Claims

1. Hybrid pressure vessel (1) having a liner (2) made of plastic with an inside (2i) and an outside (2a), having a maximum outer diameter (DL), and a metallic boss (4) having an outer diameter (DB), wherein the metallic boss (4) is adapted to receive a valve (5), wherein the hybrid pressure vessel (1) has a storage volume (SV) on the inside,
wherein the liner (2) is pipe-shaped, wherein the outer diameter (DB) of the boss (4) is at least as large as the maximum outer diameter (DL) of the liner (2),
wherein the liner (2) is made of a plastic material at least partially plastically deformable under pressure, the hybrid pressure vessel has further at least one outer layer (3) applied on the liner (2) to the reinforcement thereof and a boss (4) with a squeezing ring (41) and counter piece (42) for receiving the valve (5) and for sealing the storage volume with respect to the liner (2), wherein the liner (2) comprises a cylindrical connecting area (23) with an outside (23a) and an inside (23i) for connecting the boss (4), wherein the squeezing ring (41) is positioned on one side (23i, 23a) of the connecting area (23) of the liner (2) and the counter piece (42) for generating a sealing pressure (AD) between squeezing ring (41), connecting area (23) of the liner (2) and counter piece (42) is positioned on a different side (23a, 23i) of the connecting area (23) of the liner (2), wherein the counter piece (42) has on its side (42i) facing the connecting area (23) of the liner (2) a suitably formed groove (421) with a first edge (421a) facing the storage volume (SV) and a second edge (421b) in the opposite direction for receiving a sealing ring (6) which seals under the sealing pressure (AD), wherein the groove (421) and the sealing ring (6) are dimensioned and the liner material is provided to form first and second sealing beads (24a, 24b) protruding at least in both gaps (L1, L2) between sealing ring (6) and first and second edge (421a, 421b) under the sealing pressure (AD) due to its plastic deformability.

2. Hybrid pressure vessel (1) according to Claim 1,
**characterized in that**
the squeezing ring (41) is positioned on the inside (23i) of the connecting area (23) of the liner (2) and the counter piece (42) for generating a sealing pressure (AD) between squeezing ring (41), connecting area (23) of the liner (2) and counter piece (42), is positioned on the outside (23a) of the connecting area (23) of the liner (2).

3. Hybrid pressure vessel (1) according to Claim 1,
**characterized in that**
the squeezing ring (41) is positioned on the outside (23a) of the connecting area (23) of the liner (2) and the counter piece (42) for generating a sealing pressure (AD) between squeezing ring (41), connecting area (23) of the liner (2) and counter piece (42), is positioned on the inside (23i) of the connecting area (23) of the liner (2).

4. Hybrid pressure vessel (1) according to any of the preceding Claims,
**characterized in that**
the squeezing ring (41) is dimensioned such that the liner material, due to its plastic deformability, forms a third bead (24c) around the squeezing ring (41) on its underside (41u) facing the storage volume (SV).

5. Hybrid pressure vessel (1) according to any of the preceding Claims,
**characterized in that**
the squeezing ring or the counter piece (42) is formed such that between the storage volume (SV) and a topside (23o) of the connecting area (23) of the liner (2), there is an open gas connection (GV) to the storage volume (SV).

6. Hybrid pressure vessel (1) according to Claim 5,
**characterized in that**
the squeezing ring (41) comprises a first side (41a) facing the connecting area (23) of the liner (2) and an opposite second side (41i), wherein the area of the side (41a, 41i) of the squeezing ring (42) which rests on the connecting area (23) of the liner (2) is smaller than its opposite other side (41i, 41a).

7. Hybrid pressure vessel (1) according to one of any of the preceding Claims,
**characterized in that**
the counter piece (42) has, on its side (42i) facing the connecting area (23) of the liner (2), at least one additional suitably formed groove for absorbing axial forces.

8. Method of manufacturing a hybrid pressure vessel (1) according to any of the preceding Claims,
**comprising the steps:**
1) providing a prefabricated pipe-shaped liner (2),
2) placing the squeezing ring (41) into the or on the connecting area (23) of the liner (2),
3) forming at least first and second sealing beads (24a, 24b) which under the sealing pressure (AD), with the groove (421) and the sealing ring (6) dimensioned accordingly, protrude into both gaps (L1, L2) between the sealing ring (6) and the first (421a) or second edge (421b), respectively, due to plastic deformability of the liner material, so as to seal the storage volume (SV) to be produced,
4) manufacturing the outer layer (3) on the liner (2), and
5) positioning the valve (5) into the boss (4).

9. Method according to Claim 8,
**characterized in that**
the method comprises the further step of forming (180) a third bead (24c) around the squeezing ring (41) on its underside (41u) facing the storage volume (SV) due to plastic deformability of the liner material.

10. Method according to Claim 8 or 9,
**characterized in that**
the outer layer (3) has an inner ply (31) and an outer ply (32), wherein the outer ply (32) is wrapped over the inner ply (31) and the boss (4).

11. Method according to Claim 10,
**characterized in that**
the prefabricated semi-finished pipe of the inner ply (31) is a fiber-composite pipe around which circumferential plies are wrapped, wherein the circumferential plies have an angle with respect to the longitudinal axis of the fiber-composite pipe which increases from the inside outward.

12. Method according to one of Claims 10 or 11,
**characterized in that**
the pipe-shaped liner (2) is cut to length from a cylindrical semi-finished pipe.

13. Method according to one of Claims 10 to 12,
**characterized in that**
the outer ply (32) is wrapped from an FCM, wherein the outer ply (32) is wrapped with wrapping angles between 30° and 90°, preferably between 35° and 90°, particularly preferably between 40° and 90° with respect to the longitudinal axis of the liner (2).

14. Method according to one of Claims 10 to 13,
**characterized in that**
the pipe-shaped liner (2) is constricted in its connecting area (23).

15. Method according to one of Claims 10 to 14,
**characterized in that**
the squeezing ring (41) is brought into position by means of an installation device.

16. Method according to one of Claims 10 to 15,
**characterized in that**
the squeezing ring (41) is subjected to a temperature treatment prior to installation so that there is a large difference in temperature between the squeezing ring (41) and the liner at the time of installation, wherein due to this difference in temperature the squeezing ring is placed on the liner (2) or inserted in the liner (2), respectively, with play, wherein the squeezing ring (41) is brought to its desired position, in which it squeezes the liner (2) by equalization of its temperature with the temperature of the liner (2).

## Revendications

1. Récipient sous pression hybride (1) pourvu d'un liner (2) en matière plastique, comportant une face intérieure (2i) et une face extérieure (2a) avec un diamètre extérieur (DL) maximum et une collerette (4) métallique avec un diamètre extérieur (DB), la collerette (4) métallique étant aménagée pour recevoir une vanne (5), le récipient sous pression hybride comportant en son intérieur un volume d'accumulation (SV),
le liner étant réalisé de forme tubulaire, le diamètre extérieur (DB) de la collerette étant au moins égal au diamètre extérieur (DL) maximum du liner, le liner (2) étant fabriqué en une matière plastique au moins partiellement déformable sous pression, le récipient sous pression hybride comportant par ailleurs au moins une couche extérieure (3) appliquée sur le liner (2) pour le renforcer et une collerette (4) pourvue d'une bague de serrage (41) et d'une pièce antagoniste (42) pour recevoir la vanne (5) et pour assurer l'étanchéité du volume d'accumulation par rapport au liner (2), pour raccorder la collerette (4), le liner (2) comprenant une zone de raccordement (23) de forme cylindrique pourvu d'une face extérieure (23a) et d'une face intérieure (23i), la bague de serrage (41) étant positionnée sur une face (23i, 23a) de la zone de raccordement (23) du liner (2) et pour générer une pression d'étanchéité (AD) entre la bague de serrage (41), la zone de raccordement (23) du liner (2) et la pièce antagoniste (42), la pièce antagoniste (42) étant positionnée sur une autre face (23a, 23i) de la zone de raccordement (23) du liner (2), sur sa face (42i) orientée vers la zone de raccordement (23) du liner (2), la pièce antagoniste (42) comportant une rainure (421) de conformation adaptée, pourvue d'une première arête (421a) dirigée vers le volume d'accumulation (SV) et d'une deuxième arête(421b) présente dans la direction opposée, pourvue d'une bague d'étanchéité (6) réceptionnée à l'intérieur, assurant l'étanchéité sous la pression d'étanchéité (AD), la rainure (421) et la bague d'étanchéité (6) étant dimensionnées de telle sorte à et la matière du liner étant prévue pour créer sous la pression d'étanchéité (AD), du fait de sa déformabilité plastique des bourrelets d'étanchéité (24a, 24b) saillant au moins dans les deux espaces (L1, L2) entre la bague d'étanchéité (6) et entre la première et la deuxième arête (421a, 421b).

2. Récipient sous pression hybride (1) selon la revendication 1,
**caractérisé en ce que**
la bague de serrage (41) est positionnée sur la face intérieure (23i) de la zone de raccordement (23) du liner (2) et pour générer une pression d'étanchéité (AD) entre la bague de serrage (41), la zone de raccordement (23) du liner (2) et la pièce antagoniste (42), la pièce antagoniste (42) est positionnée sur la face extérieure (23a) de la zone de raccordement (23) du liner (2).

3. Récipient sous pression hybride (1) selon la revendication 1,
**caractérisé en ce que**
la bague de serrage (41) est positionnée sur la face extérieure (23a) de la zone de raccordement (23) du liner (2) et pour générer une pression d'étanchéité (AD) entre la bague de serrage (41), la zone de raccordement (23) du liner (2) et la pièce antagoniste (42), la pièce antagoniste (42) est positionnée sur la face intérieure (23i) de la zone de raccordement (23) du liner (2).

4. Récipient sous pression hybride (1) selon l'une quelconque des revendications précédentes,
**caractérisé en ce que**
la bague de serrage (41) est dimensionnée de telle sorte que du fait de sa déformabilité plastique, la matière du liner créé un troisième bourrelet (24c) autour de la bague de serrage (41), sur sa face inférieure (41u) dirigée vers le volume d'accumulation (SV).

5. Récipient sous pression hybride (1) selon l'une quelconque des revendications précédentes,
**caractérisé en ce que**
la bague de serrage ou la pièce antagoniste (42) est conformée de telle sorte, qu'entre le volume d'accumulation (SV) et une face supérieure (23o) de la zone de raccordement (23) du liner (2), il subsiste une liaison gazeuse (GV) ouverte vers le volume d'accumulation (SV).

6. Récipient sous pression hybride (1) selon la revendication 5,
**caractérisé en ce que**
la bague de serrage (41) comprend une première face (41a) dirigée vers la zone de raccordement (23) du liner (2) et une deuxième face (41i) opposée, la surface de la face (41a, 41i) de la bague de serrage (42) reposant sur la zone de raccordement (23) du liner (2) étant inférieure à celle de son autre face (41i, 41a) opposée.

7. Récipient sous pression hybride (1) selon l'une quelconque des revendications précédentes,
**caractérisé en ce que**
sur sa face (42i) orientée vers la zone de raccordement (23) du liner (2), la pièce antagoniste (42) comporte au moins une rainure supplémentaire de conformation adaptée, pour absorber des forces axiales.

8. Procédé, destiné à fabriquer un récipient sous pression hybride (1) selon l'une quelconque des revendications précédentes,
comprenant les étapes consistant à
1) mettre à disposition un liner (2) préfabriqué de forme tubulaire,
2) insérer la bague de serrage (41) dans ou sur la zone de raccordement (23) du liner (2),
3) créer au moins des premiers et deuxièmes bourrelets d'étanchéité (24a, 24b), qui sous la pression d'étanchéité (AD), si la rainure (421) et la bague d'étanchéité (6) sont dimensionnées en conséquence, du fait de la déformabilité plastique de la matière du liner, saillissent dans les deux espaces (L1, L2) entre la bague d'étanchéité (6) et la première arête (421a) ou la deuxième arête (421b), pour assurer l'étanchéité du volume d'accumulation (SV) ultérieur,
4) fabriquer la couche extérieure (3) sur le liner (2), et
5) insérer la vanne (5) dans la collerette (4).

9. Procédé selon la revendication 8,
**caractérisé en ce que**
le procédé comprend l'étape supplémentaire de la création (180) d'un troisième bourrelet (24c) autour de la bague de serrage (41), sur sa face inférieure (41u) dirigée vers le volume d'accumulation (SV), du fait de la déformabilité plastique de la matière du liner.

10. Procédé selon la revendication 8 ou 9,
**caractérisé en ce que**
la couche extérieure (3) comporte une épaisseur (31) intérieure et une épaisseur (32) extérieure, l'épaisseur (32) extérieure étant enroulée pardessus l'épaisseur (31) intérieure et la collerette (4).

11. Procédé selon la revendication 10,
**caractérisé en ce que**
le produit semi-fini tubulaire préfabriqué de l'épaisseur (31) intérieure est un tube composite renforcé par fibres, le tube composite renforcé par fibres étant enroulé avec des épaisseurs périphériques, les épaisseurs périphériques présentant un angle croissant de l'intérieur vers l'extérieur par rapport à l'axe longitudinale du tube composite renforcé par fibres.

12. Procédé selon l'une quelconque des revendications 10 ou 11,
**caractérisé en ce que**
l'on coupe le liner (2) de forme tubulaire de la longueur d'un produit semi-fini tubulaire de forme cylindrique.

13. Procédé selon l'une quelconque des revendications 10 à 12,
**caractérisé en ce que**
l'on enroule l'épaisseur (32) extérieure à partir d'un FVM, l'épaisseur (32) extérieure étant enroulée avec des angles d'enroulement compris entre 30 ° et 90 °, de préférence entre 35 ° et 90 °, de manière particulièrement préférentielle, entre 40 ° et 90 ° par rapport à l'axe longitudinal du liner (2).

14. Procédé selon l'une quelconque des revendications 1O à 13,
**caractérisé en ce que**
l'on étrangle le liner (2) de forme tubulaire sur sa zone de raccordement (23).

15. Procédé selon l'une quelconque des revendications 1O à 14, **caractérisé en ce que**
l'on amène la bague de serrage (41) dans sa position au moyen d'un dispositif de montage.

16. Procédé selon l'une quelconque des revendications 1O à 15,
**caractérisé**
**en ce qu'**avant le montage, l'on soumet la bague de serrage (41) à un traitement thermique, de sorte que la bague de serrage (41) présente une température différentielle importante par rapport au liner au moment du montage, du fait de la température différentielle, la bague de serrage étant placée sur le liner (2) ou introduite dans le liner (2) avec un jeu, la bague de serrage (41) étant amenée dans sa position souhaitée dans laquelle, du fait de l'adaptation de sa température à la température du liner (2), elle écrase le liner (2).
